# EUROPÄISCHE PATENTANMELDUNG

(11) **EP 4 086 594 A1**
(43) Veröffentlichungstag der Anmeldung: **09.11.2022**
(21) Anmeldenummer: 22167810.5
(22) Anmeldetag: 12.04.2022
(51) Int. Cl.: G01G 13/02

(54) **AUSGABEVORRICHTUNG FÜR NAHRUNGSMITTEL**

(30) Priorität: 03.05.2021 AT 503402021
(71) Anmelder: BrainTec Produktentwicklung GmbH, 8443 Gleinstätten (AT)
(72) Erfinder: Schweinzger, Johann, 8443 Gleinstätten (AT)
(74) Vertreter: Schwarz & Partner Patentanwälte GmbH

(57) **Zusammenfassung**

Die Erfindung betrifft eine Ausgabevorrichtung für schüttfähige Nahrungsmittel, umfassend ein Gehäuse (7), zumindest einen Vorratsbehälter (1) zur Aufnahme der Nahrungsmittel, einen unterhalb des zumindest einen Vorratsbehälters (1) angeordneten Wiegebehälter (2) und einen Wiegesensor (2'), wobei der Wiegebehälter (2) mit dem Wiegesensor (2') verbunden ist und wobei der Vorratsbehälter (1) an der Unterseite eine verschließbare Öffnung (1') aufweist, wobei die Ausgabevorrichtung eine Steuereinrichtung und zumindest eine Steuerklappe (3) umfasst, wobei die Steuereinrichtung konfiguriert ist das Öffnen und Schließen der Steuerklappe (3) zu steuern, wobei bei geöffneter Steuerklappe (3) Nahrungsmittel aus dem Vorratsbehälter (1) in den Wiegebehälter (2) gelangen und bei geschlossener Steuerklappe (3) die Abgabe der Nahrungsmittel in den Wiegebehälter (2) verhindert wird. Weiters weist die Ausgabevorrichtung zumindest eine Vibrationsvorrichtung (5) auf und umfasst ein Einstellmittel, wobei die zumindest eine Vibrationsvorrichtung (5) an der Unterseite der zumindest einen Förderrinne (4) angebracht ist, wobei die Förderrinne (4) vorzugsweise auf Schaumstoff gelagert ist, wobei die Steuereinrichtung die Vibrationsvorrichtung (5) abhängig von der Schüttfähigkeit der Nahrungsmittel steuert und wobei mit dem Einstellmittel die Neigung der Förderrinne (4) abhängig von der Schüttfähigkeit der Nahrungsmittel einstellbar ist.

## Beschreibung

Die Erfindung betrifft eine Ausgabevorrichtung für schüttfähige Nahrungsmittel, umfassend ein Gehäuse, zumindest einen Vorratsbehälter zur Aufnahme der Nahrungsmittel, einen unterhalb des zumindest einen Vorratsbehälters angeordneten Wiegebehälter und einen Wiegesensor, wobei der Wiegebehälter mit dem Wiegesensor verbunden ist, wobei der Vorratsbehälter an der Unterseite eine verschließbare Öffnung aufweist, wobei die Ausgabevorrichtung eine Steuereinrichtung und zumindest eine Steuerklappe umfasst, wobei die Steuereinrichtung konfiguriert ist das Öffnen und Schließen der Steuerklappe zu steuern, wobei bei geöffneter Steuerklappe Nahrungsmittel aus dem Vorratsbehälter in den Wiegebehälter gelangen und bei geschlossener Steuerklappe die Abgabe der Nahrungsmittel in den Wiegebehälter verhindert wird, wobei die Ausgabevorrichtung zumindest eine Förderrinne umfasst, wobei die Förderrinne ein vorderes und ein hinteres Ende aufweist und zwischen der Öffnung des zumindest einen Vorratsbehälters und der Steuerklappe angeordnet ist, wobei das vordere Ende der Förderrinne unter der Öffnung des Vorratsbehälters und das hintere Ende der Förderrinne über dem Wiegebehälter angeordnet ist.

Ausgabevorrichtungen für Nahrungsmittel, im speziellen unverpackte Nahrungsmittel, bieten in Zeiten der Klimaerwärmung große Vorteile. Mithilfe solcher Ausgabevorrichtungen können Nahrungsmittel in Lebensmittelgeschäften ohne Verpackung angeboten werden und Kunden können eigene Behälter zur Aufbewahrung und zum Transport der Nahrungsmittel mitbringen. Zudem können vom Kunden eigene Nahrungsmittelmischungen zusammengestellt werden und die Menge ist frei wählbar.

Solche Ausgabevorrichtungen weisen meist mehrere Vorratsbehälter auf, in welchen die Nahrungsmittel gelagert werden und in weiterer Folge vom Kunden entnommen werden. Die Entnahme erfolgt bei den bekannten Vorratsbehältern über einen Dosiermechanismus wie ein Dosierrad oder eine verschwenkbare Klappe, welcher vom Kunden per Hand betätigt werden muss. Danach kann die in einen Behälter abgefüllte Ware an einer externen Waage abgewogen und verrechnet werden. Es ist somit nicht möglich, eine exakte Menge an Nahrungsmitteln zu erhalten, da der Kunde per Augenmaß die Nahrungsmittel in den Behälter abfüllt und erst danach abwiegt. Zudem ist es auch nicht möglich bestimmte Mischungen von Nahrungsmitteln aus verschiedenen Vorratsbehältern mit einem genauen Mischverhältnis zu entnehmen. Beispielsweise haben Cerealien-Mischungen wie Bircher-Müsli ein vorgegebenes Mischverhältnis, welches durch die oben beschriebene Entnahme aus Vorratsbehältern durch den Kunden nur schwer und äußerst kompliziert zu erreichen ist. Der Kunde müsste nach der Entnahme jedes einzelnen Bestandteils der Mischung diesen abwiegen und gegebenenfalls bereits hinzugefügte Bestandteile erneut hinzufügen, um das gewünschte Mischverhältnis zu erreichen.

Die Aufgabe der vorliegenden Erfindung ist eine Ausgabevorrichtung für Nahrungsmittel bereitzustellen, welche die angeführten Nachteile des Standes der Technik vermeidet.

Erfindungsgemäß wird die vorliegende Aufgabe durch die Bereitstellung einer Ausgabevorrichtung für Nahrungsmittel mit den Merkmalen von Anspruch 1 gelöst.

Die erfindungsgemäße Ausgabevorrichtung für schüttfähige Nahrungsmittel umfasst ein Gehäuse, zumindest einen Vorratsbehälter zur Aufnahme der Nahrungsmittel, einen unterhalb des zumindest einen Vorratsbehälters angeordneten Wiegebehälter und einen Wiegesensor, wobei der Wiegebehälter mit dem Wiegesensor verbunden ist, wobei der Vorratsbehälter an der Unterseite eine verschließbare Öffnung aufweist, wobei die Ausgabevorrichtung eine Steuereinrichtung und zumindest eine Steuerklappe umfasst, wobei die Steuereinrichtung konfiguriert ist, das Öffnen und Schließen der Steuerklappe zu steuern und wobei bei geöffneter Steuerklappe Nahrungsmittel aus dem Vorratsbehälter in den Wiegebehälter gelangen und bei geschlossener Steuerklappe die Abgabe der Nahrungsmittel in den Wiegebehälter verhindert wird.

Die Ausgabevorrichtung ermöglicht eine Ausgabe von Nahrungsmitteln aus einem Vorratsbehälter in den Wiegebehälter, in welchem mithilfe des Wiegesensors das Gewicht der ausgegebenen Nahrungsmittel bestimmt wird. Abhängig von der gewünschten Menge öffnet bzw. schließt die Steuereinrichtung die Steuerklappe, wodurch genau die gewünschte Menge an Nahrungsmitteln in kürzester Zeit ausgegeben werden kann, ohne dass ein Kunde jegliche Dosiereinrichtung bedienen müsste oder das Abwiegen der Nahrungsmittel selbst vornehmen müsste. Bei den Nahrungsmitteln kann es sich beispielsweise um Cerealien, Pasta, Nüsse, Hülsenfrüchte, Reis, Trockenfrüchte, Getreide, Saaten oder dergleichen handeln.

Die Steuerklappe kann beispielsweise schwenkbar oder verschiebbar gelagert sein und in einer offenen Position die Ausgabe der Nahrungsmittel aus dem Vorratsbehälter freigeben. In einer geschlossenen Position verhindert die Steuerklappe, dass Nahrungsmittel ungewollt in den nachfolgenden Wiegebehälter fließen können. Bevorzugt umfasst die Steuerklappe einen Aktuator, z.B. einen Servomotor, welcher von der Steuereinrichtung gesteuert wird. Das heißt, bei der Ausgabe der Nahrungsmittel in den Wiegebehälter betätigt die Steuereinrichtung den Aktuator, woraufhin sich die Steuerklappe öffnet. Sobald eine gewählte Menge an Nahrungsmitteln im Wiegebehälter vorhanden ist, betätigt die Steuereinrichtung wiederum den Aktuator und die Steuerklappe schließt sich.

Zudem kann die Steuereinrichtung einen Speicher umfassen, in welchem diverse Daten gespeichert werden können.

Der Vorratsbehälter kann lösbar an der Oberseite des Gehäuses der Ausgabevorrichtung angebracht sein. Zum Transport des Vorratsbehälters kann die Öffnung des Vorratsbehälters mit einer weiteren Klappe verschlossen sein, welche erst nach dem Einsetzen des Vorratsbehälters in die Ausgabevorrichtung vorzugsweise manuell geöffnet werden kann.

Erfindungsgemäß weist die Ausgabevorrichtung zumindest eine Förderrinne auf, wobei die Förderrinne ein vorderes und ein hinteres Ende aufweist und zwischen der Öffnung des zumindest einen Vorratsbehälters und der Steuerklappe angeordnet ist. Das vordere Ende der Förderrinne ist unter der Öffnung des Vorratsbehälters und das hintere Ende der Förderrinne über dem Wiegebehälter angeordnet, wobei mit der Steuerklappe das hintere Ende der Förderrinne verschließbar ist. Somit können die schüttfähigen Nahrungsmittel aus dem Vorratsbehälter bis in die Förderrinne vordringen, an deren Ende sie von der Steuerklappe aufgehalten werden. Bei der Ausgabe einer gewählten Nahrungsmittelmenge wird die Steuerklappe durch die Steuereinrichtung geöffnet, wodurch die Nahrungsmittel von der Förderrinne in den Wiegebehälter gelangen. Sobald die gewählte Menge an Nahrungsmitteln mithilfe des Wiegesensors im Wiegebehälter gemessen wird, wird die Steuerklappe wieder geschlossen und ein kleiner Teil an Nahrungsmitteln fällt noch zusätzlich in den Wiegebehälter, welcher bereits die Steuerklappe passieren konnte. Dadurch ist immer gewährleistet, dass keine geringere Menge als gewünscht bzw. gewählt an Nahrungsmitteln im Wiegebehälter landet. Genauer gesagt, erhält ein Kunde durch die nachfallenden Nahrungsmittel immer eine geringfügig größere Menge an Nahrungsmitteln als gewünscht. Vorzugsweise wird bei der Abrechnung jedoch nur die gewählte Menge bezahlt.

Weiters umfass die zumindest eine Förderrinne eine Vibrationsvorrichtung, vorzugsweise einen Vibrationsmotor, und ein Einstellmittel, wobei die zumindest eine Vibrationsvorrichtung an der Unterseite der zumindest einen Förderrinne angebracht ist und die Förderrinne vorzugsweise dreidimensional frei beweglich , z.B. auf Schaumstoff, gelagert ist. Die Steuereinrichtung steuert die Vibrationsvorrichtung abhängig von der Schüttfähigkeit der Nahrungsmittel. Zusätzlich kann mit dem Einstellmittel die Neigung der Förderrinne abhängig von der Schüttfähigkeit der Nahrungsmittel eingestellt werden. Je nach Ausführungsvariante kann die erfindungsgemäße Ausgabevorrichtung auch entweder eine Vibrationsvorrichtung im Bereich der Förderrinne oder ein Einstellmittel umfassen.

Bei der Vibrationsvorrichtung an der Förderrinne kann es sich um einen Vibrationsmotor wie einen Motor mit Unwucht handeln. Dieser kann individuell auf das Produkt abgestimmt und in der Drehzahl gesteuert werden, um einen optimalen Nahrungsmitteltransport zu ermöglichen. Bevorzugt ist die Förderrinne dreidimensional gelagert, sodass sich die Vibrationen in allen Richtungen ausbreiten können. Zudem kann die Förderrinne in der Ausgabevorrichtung auf einem schwingungsdämpfenden Material wie Schaumstoff gelagert sein, sodass sich die Vibrationen und eventuell durch die Vibrationen entstehende Geräusche nicht ausbreiten können. Der Förderrinne kann auch hinsichtlich des unterschiedlichen Fließverhaltens der Nahrungsmittel mithilfe des Einstellmittels in der Neigung verstellt werden. Je langsamer die Nahrungsmittel in der Förderrinne fließen, desto steiler kann die Neigung der Förderrinne eingestellt werden und umgekehrt.

In einer weiteren Ausführungsvariante umfasst die Ausgabevorrichtung eine Auswurfklappe und der Wiegebehälter weist an der Unterseite eine Öffnung auf, welche von der Auswurfklappe in einem geschlossenen Zustand verschlossen wird. Die Steuereinrichtung ist dabei konfiguriert das Öffnen und Schließen der Auswurfklappe zu steuern. Somit können die Nahrungsmittel direkt aus dem Wiegebehälter ausgeworfen werden, ohne dass dieser aus der Ausgabevorrichtung entnommen werden muss. Die Auswurfklappe kann wiederum einen Aktuator, vorzugsweise einen Servomotor, umfassen, welcher von der Steuereinheit gesteuert wird.

In einer weiteren Ausführungsvariante umfasst die Ausgabevorrichtung einen Produkttrichter, welcher eine Öffnung an der Unterseite aufweist und unter der Öffnung des Wiegebehälters angeordnet ist. Außerdem kann zumindest eine zusätzliche Vibrationsvorrichtung am Produkttrichter und/oder am Wiegebehälter angebracht sein, welche wiederum von der Steuereinrichtung gesteuert wird. Somit gelangen die Nahrungsmittel vom Wiegebehälter, sobald die Auswurfklappe sich durch die Steuereinrichtung öffnet, in den Produktrichter. Die trichterförmige Form des Produkttrichters erlaubt eine gezielte Ausgabe der Nahrungsmittel direkt unterhalb der Öffnung an der Unterseite des Trichters, unabhängig von der Form und Ausgestaltung des Wiegebehälters und der Auswurfklappe. Speziell in der Ausführungsvariante, in welcher die Auswurfklappe schwenkbar gelagert ist und beim Öffnen nach unten schwenkt, kann nicht direkt unterhalb der Auswurfklappe ein Behälter platziert werden, da sich die Auswurfklappe sonst nicht mehr öffnen könnte. Indem sich zwischen Auswurfklappe und Behälter noch der Produkttrichter befindet, werden solche Probleme bei der Ausgabe vermieden. Eine Vibrationsvorrichtung am Produkttrichter und/oder am Wiegebehälter unterstützt zusätzlich die Ausgabe weniger schüttfähiger Nahrungsmittel, die eventuell beim Öffnen der Auswurfklappe im Wiegebehälter oder im Produkttrichter verbleiben würden und nicht in einen darunter angeordneten Behälter fallen würden. Somit wird wiederum gewährleistet, dass ein Kunde keine geringere Menge als die gewählte Menge an Nahrungsmitteln aus der Ausgabevorrichtung erhält.

Des Weiteren kann die Ausgabevorrichtung einen Aufnahmebereich für einen Behälter aufweisen, welcher unter der Auswurfklappe angeordnet ist. Bevorzugt ist im Aufnahmebereich ein Sensor zur Erfassung eines im Aufnahmebereich abgestellten Behälters angeordnet, wobei der Sensor vorzugsweise ein Ultraschallsensor ist. Die Steuereinrichtung kommuniziert mit dem Sensor und gibt nach Erfassung eines Behälters im Aufnahmebereich das Öffnen der Auswurfklappe frei. Dadurch wird vermieden, dass Nahrungsmittel über die Auswurfklappe freigegeben werden, ohne dass sich ein Behälter darunter befindet.

In einer weiteren Ausführungsvariante kann ein externer Behälter auch am Wiegebehälter platziert werden, wobei das Gewicht des Behälters vorab bestimmt wird, um den Wiegesensor zu tarieren und bei der Ausgabe nur das tatsächliche Gewicht der Nahrungsmittel zu messen.

In dem Aufnahmebereich kann auch ein visuelles Signalmittel zur Abgabe eines Lichtsignals angeordnet sein. Das Signalmittel kann wiederum von der Steuereinheit gesteuert werden. Das Lichtsignal kann dabei angeben, dass die gewählten Nahrungsmittel in den Wiegebehälter ausgegeben wurden. Sollten mehrere Ausgabevorrichtungen nebeneinander angeordnet sein, welche über die Steuereinrichtung miteinander gekoppelt werden können, kann das Lichtsignal außerdem die Ausgabevorrichtung kennzeichnen, in welcher die Nahrungsmittel im Wiegebehälter zur Entnahme bereitstehen.

Außerdem kann die Ausgabevorrichtung zusätzlich einen Ausgabeknopf umfassen, mittels welchem die Auswurfklappe geöffnet werden kann. Dieser kann wiederum von der Steuereinrichtung gesteuert werden. Bevorzugt erlaubt der Ausgabeknopf erst dann das Öffnen der Auswurfklappe, wenn der Sensor im Ausgabebereich einen Behälter erfasst hat und dies an die Steuereinrichtung weitergeleitet wurde. Der Ausgabeknopf kann dann von einem Kunden bedient werden, sobald dieser die Ausgabe der Nahrungsmittel in den Behälter wünscht.

In einer bevorzugten Ausführungsvariante umfasst die Ausgabevorrichtung eine Auswahleinrichtung, wobei die Auswahleinrichtung am Gehäuse der Ausgabevorrichtung angebracht ist oder als externes Gerät ausgebildet ist. Die Auswahleinrichtung ist dazu eingerichtet, ein Steuersignal an die Steuereinheit zu senden, welches die Ausgabe der Nahrungsmittel aus dem zumindest einen Vorratsbehälter startet und zusätzlich kann mit der Auswahleinrichtung die Menge der auszugebenden Nahrungsmittel ausgewählt werden.

Bei der Auswahleinrichtung kann es sich um ein Endgerät, beispielsweise um ein Tablet handeln, auf welchem mittels einer Applikation die gewünschte Menge eines Nahrungsmittels oder einer Mischung ausgewählt werden kann.

Des Weiteren kann die Auswahleinrichtung ein Anzeigeelement, vorzugsweise einen Touchscreen, am Gehäuse der Ausgabevorrichtung aufweisen. Mit diesem Anzeigeelement können zusätzlich auch Produktinformationen zu den Nahrungsmitteln in den Vorratsbehältern oder Werbeinformationen angezeigt werden. Diese Werbeinformationen können in einem Standby-Modus angezeigt werden, in welchem gerade keine Ausgabe an der Ausgabevorrichtung stattfindet. Das Anzeigeelement kann somit ein Display umfassen, an welchem ein Kunde die gewünschten Nahrungsmittel und Mengen auswählen kann und über welches der Kunde die Ausgabevorrichtung ansteuern kann.

Besonders bevorzugt umfasst die Ausgabevorrichtung außerdem zumindest einen Identifikationssensor ausgewählt aus der Gruppe, bestehend aus Barcode-, QR-Code-Scanner, Magnetstreifenleser und RFID-Reader, wobei der Identifikationssensor eingerichtet ist, Informationen bezüglich auszugebender Nahrungsmittelmengen, auszugebender Nahrungsmittelmischverhältnisse oder Personenidentifikationen an die Steuereinheit weiterzuleiten. Mithilfe des Identifikationssensors kann ein vorab generierter Barcode, QR-Code, Magnetstreifen oder RFID-Chip direkt an der Ausgabevorrichtung eingelesen werden. So kann ein Kunde, der immer die gleiche Nahrungsmittelmenge bzw. das gleiche Mischverhältnis möchte, immer mit demselben Code oder Chip diese Menge bzw. Mischung an der Ausgabevorrichtung anfordern, ohne die Informationen an einer Auswahleinrichtung an der Ausgabevorrichtung ständig neu eingeben zu müssen.

Anhand einer Personenidentifikationen durch den Identifikationssensor, beispielsweise mittels eines RFID-Chips, kann in ein Bedienermenü zugegriffen werden, welches die Produktdaten beinhaltet. Hier kann der Preis, die Chargennummer, das Fülldatum und die Füllmenge der Nahrungsmittel in den Vorratsbehältern verwaltet werden. Wird ein Produkt nachgefüllt, kann die Füllmenge und die restlichen Produktdaten im Bedienermenü gewartet werden. Außerdem kann ein Entleeren der Maschine zum Zwecke der Reinigung mittels einem Programmpunkt im Bedienermenü erfolgen. Besonders bevorzugt können für die Reinigung die einzelnen Elemente, welche mit den Nahrungsmitteln in Berührung kommen, wie z.B. der Vorratsbehälter, die Förderrinne, der Wiegebehälter, die Steuer- und Auswurfklappe sowie der Produkttrichter, herausgenommen werden und z.B. im Geschirrspüler gereinigt werden. Die Elemente können beispielsweise mithilfe eines Steck- bzw. Klicksystems im Gehäuse der Ausgabevorrichtung verbaut werden.

Zudem kann beispielsweise auch mittels NFC eine bargeldlose Bezahlung direkt an der Ausgabevorrichtung ermöglicht werden.

In einer bevorzugten Ausführungsvariante umfasst die Ausgabevorrichtung zumindest zwei Vorratsbehälter, wobei in jedem der Vorratsbehälter unterschiedliche Nahrungsmittel gelagert sind und jedem der Vorratsbehälter eine Steuerklappe zugeordnet ist, wobei mit der Auswahleinrichtung ein Mischverhältnis der Nahrungsmittel abhängig von der Gesamtmenge der auszugebenden Nahrungsmittel-Mischung auswählbar ist, wobei die Steuereinrichtung konfiguriert ist, das Öffnen und Schließen der jeweiligen Steuerklappe abhängig vom ausgewählten Mischverhältnis der Nahrungsmittel zu steuern. Das heißt, mit der Ausgabevorrichtung können in einer Ausgabe nicht nur Nahrungsmittel aus einem Vorratsbehälter bezogen werden, sondern eine Mischung aus allen Vorratsbehältern. Jedem der Vorratsbehälter kann auch eine Förderrinne zugeordnet sein, deren unteres Ende wiederum von der Steuerklappe verschlossen werden kann. Die Förderrinnen bzw. Steuerklappen können alle in den Wiegebehälter munden, in welchem die einzelnen Bestandteile eines bestimmten Mischverhältnisses mithilfe des Wiegesensors gewogen werden. Besonders bevorzugt muss ein Kunde nur das Mischverhältnis der Nahrungsmittel und die gewünschte Gesamtmenge angeben, beispielsweise über einen Code oder Chip, welcher vom Identifikationssensor eingelesen wird oder über die Auswahleinrichtung, und die Steuereinrichtung bestimmt abhängig von der gewünschten Gesamtmenge die Mengen der Bestandteile des gewählten Mischverhältnisses. Genauer gesagt, ist die Steuereinrichtung eingerichtet, jeweils eine Steuerklappe, welche eine Abgabe von in der Nahrungsmittelmischung vorkommenden Nahrungsmitteln aus einem Vorratsbehälter erlaubt, so lange zu öffnen, bis die durch das Mischverhältnis bestimmte Portionsgröße dieser Nahrungsmittel vom Wiegesensor gemessen wird, und danach die nächste Steuerklappe zu öffnen, bis die Gesamtmenge des Mischverhältnisses im Wiegebehälter vorhanden ist. Dies ermöglicht eine individuelle Produktzusammenstellung, welche nur mehr über die Gesamtmenge zu definieren ist. Ein Kunde kann über einen Code oder Chip eine gewünschte Produktzusammenstellung speichern und an der Ausgabeeinheit nur noch die gewünschte Gesamtmenge angeben. Schlussendlich kann die Mischung aus dem Wiegebehälter entnommen werden oder über die Auswurfklappe und eventuell einen Produkttrichter ausgegeben werden.

In einer weiteren Ausführungsvariante weist die Ausgabevorrichtung ein Funkmodul, vorzugsweise ein GSM-Modul, zur Übermittlung des Füllstands des zumindest einen Vorratsbehälters auf, wobei die Steuereinrichtung eingerichtet ist, den Füllstand zu speichern und nach einer Ausgabe von Nahrungsmitteln aus dem Vorratsbehälter die vom Wiegesensor gemessene Menge an Nahrungsmitteln vom gespeicherten Füllstand abzuziehen und bei Erreichung eines vordefinierten Mindestfüllstands das Funkmodul anzusteuern. Damit lässt sich sehr zuverlässig und ohne ständige Sichtkontrolle der Füllmenge der Vorratsbehälter die Ausgabevorrichtung warten, indem das Bedienpersonal mithilfe des Funkmoduls eine Nachricht erhält, sobald ein Mindestfüllstand erreicht wird. Ein GSM-Modul ermöglicht das Übertragen der Information, dass der Mindestfüllstand erreicht ist, an ein Endgerät, z.B. mittels einer Kurznachricht an ein Smartphone. Speziell bei opaken Vorratsbehältern, die für bestimmte Nahrungsmittel, welche beispielsweise dunkel gelagert werden müssen, notwendig sind, kann mithilfe des Funkmoduls der Füllstand sehr einfach überwacht werden und ein ständiger Bestand an Lebensmitteln in den Vorratsbehältern garantiert werden.

Dabei misst der Wiegesensor jeweils die Menge an tatsächlich ausgegebenen Nahrungsmitteln, das heißt, inklusive der nach dem Erreichen der ausgewählten Menge an Nahrungsmitteln im Wiegebehälter nachfallenden Nahrungsmittel und es wird dieser Wert gespeichert, um den tatsächlichen Füllstand anzugeben.

Außerdem kann auch vorgesehen sein, dass das gewünschte Mischverhältnis von einem Kunden vorab mittels einer Applikation auf einem Smartphone, Tablet oder Computer definiert wird und die so definierte Mischung dann einen QR-Code oder einen Strichcode erhält, welcher an der Ausgabevorrichtung mittels Barcode- oder QR-Code-Scanner eingelesen werden kann. Dadurch ist wiederum das Mischverhältnis der Nahrungsmittel bestimmt und der Kunde wählt nur noch die Gesamtmenge.

Die eingangs gestellte Aufgabe wird außerdem gelöst durch ein System zur Ausgabe von schüttfähigen Nahrungsmitteln, wobei das System zumindest eine erfindungsgemäße Ausgabevorrichtung und einen Behälter umfasst, wobei der Behälter zumindest ein Identifikationsmittel umfasst, wobei das Identifikationsmittel ausgewählt ist aus der Gruppe, bestehend aus RFID-Chip, QR-Code, Barcode und Magnetstreifen, wobei die Ausgabevorrichtung zumindest einen korrespondierenden Identifikationssensor umfasst, welcher eingerichtet ist die im Identifikationsmittel gespeicherten Informationen, vorzugsweise die maximale Füllmenge des Behälters, eine gewünschte Menge an Nahrungsmitteln, ein gewünschtes Mischverhältnis von Nahrungsmitteln oder eine Seriennummer, an die Steuereinheit weiterzuleiten. In der Steuereinheit kann zur Seriennummer z.B. eine gewünschte Menge oder ein gewünschtes Mischverhältnis an Nahrungsmitteln gespeichert sein. Dadurch lässt sich einerseits ein Überfüllen des Behälters vermeiden, indem das Identifikationsmittel, beispielsweise ein RFID-Aufkleber, die maximale Füllmenge des Behälters an die Steuereinrichtung weiterleitet. Somit kann vorab die Obergrenze der Auswahlmenge begrenzt werden, wobei das Volumen in Abhängigkeit des spezifischen Gewichts der Nahrungsmittel in den Vorratsbehältern bestimmt wird. Bei diesen Behältern kann es sich um bereitgestellte Mehrwegbehälter, Tüten oder vom Kunden selbstmitgebrachte Behälter handeln. Andererseits lässt sich mithilfe der Identifikationsmittel an den Behältern direkt am Behälter ein gewünschtes Mischverhältnis von Nahrungsmitteln oder eine gewünschte Menge definieren. Ein Kunde muss dann nur den Behälter in den Ausgabebereich der Ausgabevorrichtung stellen und es wird nach dem Einlesen der Informationen durch den Identifikationssensor automatisch die gewünschte Menge bzw. Mischung von Nahrungsmitteln in den Behälter ausgegeben.

Ein weiterer Aspekt der Erfindung betrifft ein System zur Ausgabe von schüttfähigen Nahrungsmitteln, wobei das System eine erfindungsgemäße Ausgabevorrichtung und ein Kassensystem umfasst, wobei die Ausgabevorrichtung ein Bonmodul umfasst, welches in Zusammenarbeit mit der Steuereinrichtung, in welcher die Preise pro kg der jeweiligen Nahrungsmittel gespeichert sind, eingerichtet ist, einen Preis-Bon gemäß ausgegebener Menge an Nahrungsmittel auszugeben und/oder direkt an das Kassensystem weiterzuleiten, wobei der Bon direkt am Kassensystem verarbeitbar ist. Hier wird bevorzugt der Preis der vom Kunden ausgewählten Menge an Nahrungsmitteln verrechnet und nicht der Preis der tatsächlich ausgegebenen Nahrungsmittelmenge, welche etwas größer als die ausgewählte Menge sein kann. Diese größere Menge ergibt sich aus den nach dem Messen des gewählten Gewichts mittels Wiegesensor und zeitgleichem Schließen der Steuerklappe noch in den Wiegebehälter nachfallenden Nahrungsmitteln. Dadurch ergibt sich eine Differenz zwischen tatsächlich ausgegebener Menge und ausgewählter Menge an Nahrungsmitteln.

Das Kassensystem kann einerseits extern angeordnet sein, sodass ein Kunde mit dem Preis-Bon am externen Kassensystem die ausgegebenen Nahrungsmittel bezahlen kann oder andererseits als Teil der Ausgabevorrichtung ausgeführt sein, sodass ein Kunde direkt an der Ausgabeeinheit mittels jeglichem Zahlungsmittel bezahlen kann. Zusätzlich kann das Bonmodul noch einen Bondrucker umfassen, welcher den Preis-Bon ausdruckt.

Außerdem betrifft die vorliegende Erfindung ein Verfahren zur Ausgabe von schüttfähigen Nahrungsmitteln mit zumindest einer erfindungsgemäßen Ausgabevorrichtung, wobei das Verfahren die Schritte
- Öffnen der Steuerklappe durch die Steuereinrichtung und befördern einer gewählten Nahrungsmittel-Menge aus dem Vorratsbehälter in den Wiegebehälter, wobei permanent das Gewicht der Nahrungsmittel im Wiegebehälter mithilfe des Wiegesensors gemessen wird,
- Schließen der Steuerklappe durch die Steuereinrichtung sobald die gewählte Menge an Nahrungsmittel im Wiegebehälter mittels Wiegesensor gemessen wird,
- Entnahme der Nahrungsmittel aus dem Wiegebehälter,
umfasst.

Mit dem erfindungsgemäßen Verfahren lässt sich eine gewählte Menge an Nahrungsmitteln fehlerfrei und unkompliziert ausgeben. Bei bekannten Verfahren müssen die aus einem Vorratsbehälter ausgegebenen Produkte an einer externen Waage abgewogen werden. Ein Kunde muss demnach per Augenmaß die gewünschte Menge abschätzen und kann das Gewicht erst nach der Ausgabe kontrollieren. Ein Zurückschütten der Nahrungsmittel in den Vorratsbehälter ist zudem meist nicht möglich, weshalb speziell eine zu große Menge an ausgegebenen Nahrungsmitteln nicht mehr korrigiert werden kann. Mithilfe der erfindungsgemäßen Steuereinrichtung, welche im Verfahren das Öffnen und Schließen der Steuerklappe, abhängig von der gewählten Menge an Nahrungsmitteln steuert, lassen sich diese Probleme der bekannten Verfahren überwinden.

In einer weiteren Ausführungsvariante des Verfahrens umfasst die Ausgabevorrichtung zwei oder mehr Vorratsbehälter, in welchen unterschiedliche Nahrungsmittel gelagert sind, wobei das Verfahren die Schritte
- Auswählen eines Mischverhältnisses und einer Gesamtmenge von in den Vorratsbehältern gelagerten Nahrungsmitteln mit einer Auswahleinrichtung und/oder mit einem Identifikationsmittel,
- Weiterleiten des Mischverhältnisses und der Gesamtmenge durch die Auswahleinrichtung und/oder einen Identifikationssensor an die Steuereinrichtung,
- Ausgeben einer Menge eines Nahrungsmittels aus einem der Vorratsbehälter gemäß Mischverhältnis und Gesamtmenge durch Öffnen und Schließen der zugehörigen Steuerklappe, welche die Ausgabe aus dem Vorratsbehälter in den Wiegebehälter erlaubt,
- Wiederholen des letzten Schrittes an einem anderen Vorratsbehälter bis die Gesamtmenge des Mischverhältnisses in den Wiegebehälter ausgegeben ist,
- Entnahme der Gesamtmenge aus dem Wiegebehälter
umfasst.

Bei dem Identifikationsmittel kann es sich um einen RFID-Chip, QR-Code, Barcode oder einen Magnetstreifen handeln, welches von einem Identifikationssensor, der in der Steuereinrichtung integriert sein kann, identifiziert werden kann. Durch das Verfahren lassen sich auch spezielle Mischverhältnisse sehr einfach ausgeben, indem das Verhältnis und die Gesamtmenge der gewählten Mischung ausgewählt werden. Ein Kunde bzw. eine die Ausgabevorrichtung bedienende Person kann das Mischverhältnis und/oder die Gesamtmenge entweder direkt an einer an der Ausgabevorrichtung angebrachten Auswahleinrichtung auswählen, beispielsweise einem Touchscreen, welche die Auswahl an die Steuereinrichtung weiterleitet, oder über eine externe Auswahleinrichtung bestimmen. Diese externe Auswahleinrichtung kann ein Identifikationsmittel umfassen, welches von einem Identifikationssensor an der Auswahl einrichtung eingelesen wird. Danach steuert die Steuereinrichtung in einem automatischen, vorgegebenen Ablauf die Ausgabe der Nahrungsmittel aus den einzelnen Vorratsbehältern durch Öffnen und Schließen der zugehörigen Steuerklappen. Ohne jemals selbst etwas abwiegen zu müssen, erhält der Kunde schlussendlich die Gesamtmenge des ausgewählten Mischverhältnisses. Das Mischverhältnis kann auch über eine Applikation an einem externen Endgerät oder direkt an einem eine Auswahleinrichtung aufweisenden Anzeigegerät an der Ausgabevorrichtung definiert und ausgewählt werden. Somit lassen sich mit dem erfindungsgemäßen Verfahren komplett personalisierte Mischungsverhältnisse von Nahrungsmitteln ausgeben und vom Kunden beispielsweise neue Müslisorten oder Nussmischungen kreieren.

Zudem kann das Verfahren mit zwei oder mehr Ausgabevorrichtungen und einem Behälter ausgeführt werden, wobei jede der Ausgabevorrichtungen zumindest einen Vorratsbehälter mit unterschiedlichen Nahrungsmitteln umfasst und jeder Wiegebehälter eine Öffnung mit einer Auswurfklappe umfasst, wobei das Verfahren die Schritte
- Ausgeben der Nahrungsmittel aus den jeweiligen Ausgabevorrichtungen in die Wiegebehälter der Ausgabevorrichtungen gemäß Mischverhältnis und Gesamtmenge,
- Abgeben eines Lichtsignals in einem Aufnahmebereich einer Ausgabevorrichtung mittels eines visuellen Signalmittels,
- Abstellen des Behälters in den mittels Lichtsignal gekennzeichneten Aufnahmebereich durch eine die Ausgabevorrichtung bedienende Person, wobei vorzugsweise ein im Aufnahmebereich angeordneter Sensor das Vorhandensein des Behälters an die Steuereinheit weiterleitet,
- Öffnen der Auswurfklappe des oberhalb des Behälters angeordneten Wiegebehälters,
- Wiederholen der letzten drei Schritte an einer anderen Ausgabevorrichtung bis die Gesamtmenge des Mischverhältnisses in den Behälter ausgegeben ist,
umfasst.

Dadurch lassen sich Nahrungsmittel aus einem gewählten Mischverhältnis auch aus unterschiedlichen Ausgabevorrichtungen auswählen, welche über die Steuereinrichtung miteinander gekoppelt werden. Der Kunde oder die die Ausgabevorrichtungen bedienende Person muss nur den Behälter nacheinander jeweils in die mittels Lichtsignal gekennzeichneten Aufnahmebereiche abstellen, um schlussendlich die Gesamtmenge im Behälter zu erhalten. Durch die Verwendung mehrerer Ausgabevorrichtungen lässt sich auch das Nahrungsmittel-Sortiment erweitern.

Vorteilhafte Ausgestaltungen der erfindungsgemäßen Ausgabevorrichtung, sowie alternativer Ausführungsvarianten werden in weiterer Folge anhand der Figur näher erläutert.

Dabei zeigt:

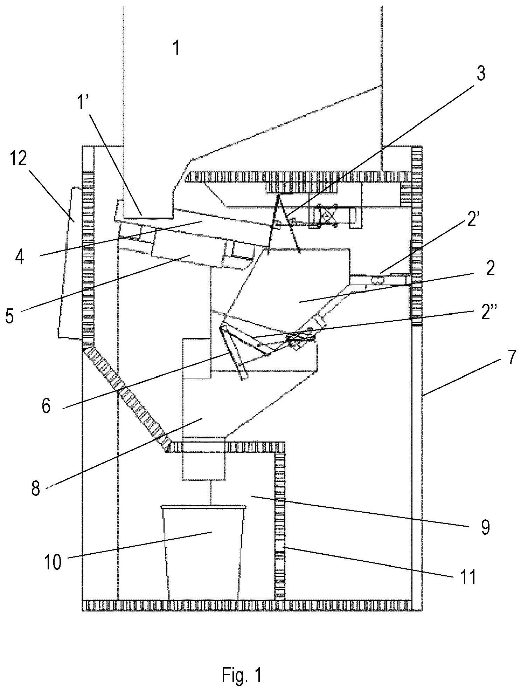

Fig. 1 eine Querschnittsdarstellung einer Ausführungsvariante der Ausgabevorrichtung.

Wie in Fig. 1 dargestellt umfasst die erfindungsgemäße Ausgabevorrichtung für schüttfähige Nahrungsmittel ein Gehäuse 7, zumindest einen Vorratsbehälter 1, einen Wiegebehälter 2 mit einem Wiegesensor 2' und eine Steuerklappe 3. Die Steuerklappe 3 wird dabei von einer Steuereinrichtung gesteuert, welche das Öffnen und Schließen der Steuerklappe 3 steuert. Die Steuerklappe 3 kann einen Aktuator, beispielsweise einen Servomotor, umfassen, welcher von der Steuereinrichtung betätigt wird. Bei Betätigung des Aktuators öffnet und schließt sich die Steuerklappe 3. Bevorzugt ist der zumindest eine Vorratsbehälter 1 an der Oberseite des Gehäuses 7 angebracht. Der Vorratsbehälter 1 kann dabei lösbar mit dem Gehäuse 7 verbunden werden, sodass eine vereinfachte Reinigung bzw. Nachfüllung des Vorratsbehälters 1 möglich ist. Zudem kann auch der Wiegebehälter 2 lösbar im Gehäuse fixiert sein, damit auch dieser sehr einfach, beispielsweise im Geschirrspüler, gereinigt werden kann. Der Wiegebehälter 2 muss mit dem Wiegesensor 2' verbunden sein, um ein Abwiegen der aus dem Vorratsbehälter 1 ausgegebenen Nahrungsmittel zu ermöglichen. In der in Fig. 1 gezeigten Ausführungsvariante ist der Wiegebehälter 2 unter dem Wiegesensor 2' angebracht.

Außerdem kann die Ausgabevorrichtung wie in Fig. 1 gezeigt noch eine Auswurfklappe 6 umfassen, welche unterhalb einer an der Unterseite des Wiegebehälters 2 angebrachten Öffnung 2" angeordnet ist. Die Steuereinrichtung erlaubt wiederum das Öffnen und Schließen der Auswurfklappe 6, wobei die Auswurfklappe 6 in einem geschlossenen Zustand die Öffnung 2" verschließt. Dadurch können Nahrungsmittel aus dem Wiegebehälter 2 nur ausgegeben werden, sobald die Auswurfklappe 6 durch die Steuereinrichtung geöffnet wird. Die Auswurfklappe 6 kann wiederum einen Aktuator wie einen Servomotor umfassen, welcher von der Steuereinrichtung betätigt wird und das Öffnen und Schließen der Auswurfklappe 6 erlaubt.

In der in Fig. 1 gezeigten Ausführungsvariante umfasst die Ausgabevorrichtung zumindest eine Förderrinne 4 mit einem vorderen und einem hinteren Ende. Die Förderrinne 4 ist zwischen der Öffnung des zumindest einen Vorratsbehälters 1' und der Steuerklappe 3 angeordnet, wobei das vordere Ende der Förderrinne 4 unter der Öffnung des Vorratsbehälters 1' und das hintere Ende der Förderrinne 4 über dem Wiegebehälter 2 angeordnet ist. Die aus der Öffnung des Vorratsbehälters 1' herausfallenden Nahrungsmittel gelangen somit zuerst in die Förderrinne 4, von wo sie weiter in den Wiegebehälter 2 geleitet werden. Die Steuerklappe 3 verschließt dabei das hintere Ende der Förderrinne 4 und gibt nur in einem geöffneten Zustand die Ausgabe der Nahrungsmittel aus der Förderrinne 4 in den Wiegebehälter frei. Die Förderrinne 3 verlangsamt die Ausgabe der Nahrungsmittel aus dem Vorratsbehälter 1, sodass zwischen dem Zeitpunkt, zu dem eine gewählte Menge an Nahrungsmittel im Wiegebehälter 2 durch den Wiegesensor 2' gemessen wird und dem Zeitpunkt, zu dem die Steuerklappe 3 das hintere Ende der Förderrinne 4 wieder verschließt, nur eine geringe Menge zusätzlich zur gewählten Menge an Nahrungsmittel in den Wiegebehälter 2 nachfällt. Eine besonders genaue Abgabe des gewünschten Gewichts der Nahrungsmittel ist dadurch ermöglicht.

In dieser Ausführungsvariante umfasst die Ausgabevorrichtung bevorzugt auch eine Vibrationsvorrichtung 5, vorzugsweise einen Vibrationsmotor, und ein Einstellmittel. Die Vibrationsvorrichtung 5 ist an der Unterseite der zumindest einen Förderrinne 4 angebracht und lässt sich von der Steuereinrichtung abhängig von der Schüttfähigkeit der Nahrungsmittel steuern. Mit dem Einstellmittel kann die Neigung der Förderrinne 4 abhängig von der Schüttfähigkeit der Nahrungsmittel eingestellt werden. Die Vibrationsvorrichtung 5 und das Einstellmittel verbessern somit das Fließverhalten der Nahrungsmittel entlang der Förderrinne 4.

In einer weiteren Ausführungsvariante umfasst die Ausgabevorrichtung einen Produkttrichter 8 mit einer Öffnung an der Unterseite. Der Produkttrichter 8 ist unter der Öffnung des Wiegebehälters 2" angeordnet ist. Zusätzlich kann am Produkttrichter 8 und/oder am Wiegebehälter 2 eine zusätzliche Vibrationsvorrichtung angebracht sein, welche wiederum von der Steuereinrichtung gesteuert wird. Dadurch wird wiederum das Fließverhalten der Nahrungsmittel im Produkttrichter 8 bzw. im Wiegebehälter 2 verbessert und es wird verhindert, dass Nahrungsmittel dort verbleiben.

Des Weiteren kann die Ausgabevorrichtung einen Aufnahmebereich 9 für einen Behälter 10 aufweisen, welcher wie in Fig. 1 dargestellt unter der Auswurfklappe 6 angeordnet ist. Bevorzugt befindet sich im Aufnahmebereich 9 ein Sensor 11, vorzugsweise ein Ultraschallsensor, zur Erfassung eines im Aufnahmebereich 9 abgestellten Behälters 10 angeordnet ist. Dabei kommuniziert die Steuereinrichtung mit dem Sensor 11 und gibt nach Erfassung eines Behälters 10 das Öffnen der Auswurfklappe 6 frei. Es wird daher verhindert, dass Nahrungsmittel ohne das Vorhandensein eines Behälters 10 im Aufnahmebereich 9 ausgegeben werden.

In einer weiteren Ausführungsvariante kann die Ausgabevorrichtung ein Anzeigeelement 12 an der Außenseite des Gehäuses 7 umfassen. Dieses Anzeigeelement 12 kann wie in Fig. 1 dargestellt an der Vorderseite der Ausgabevorrichtung angebracht sein. Das Anzeigeelement 12 kann in Form eines Displays, vorzugsweise eines Touchscreens, am Gehäuse 7 angebracht sein. In einem Standby-Modus können am Anzeigeelement 12 Produktinformationen zu den Nahrungsmitteln oder sonstige Werbeinformationen angezeigt werden. Am Anzeigeelement 12 können auch die Preise der gewählten Nahrungsmittel angezeigt werden. Sofern die Ausgabevorrichtung ein Kassensystem umfasst, können die ausgegebenen Nahrungsmittel direkt an der Ausgabevorrichtung bezahlt werden.

Außerdem kann mithilfe des Anzeigeelements 12 eine Auswahleinrichtung ermöglicht werden, welche dazu eingerichtet ist, ein Steuersignal an die Steuereinheit zu senden. Dieses Signal startet dann die Ausgabe der Nahrungsmittel aus dem zumindest einen Vorratsbehälter 1. Zudem kann mithilfe der Auswahleinrichtung die Menge und/oder das Mischverhältnis der auszugebenden Nahrungsmittel ausgewählt werden.

Weiters kann ein Identifikationssensor ausgewählt aus der Gruppe, bestehend aus Barcode-, QR-Code-Scanner, Magnetstreifenleser und RFID-Reader, als Teil des Anzeigeelements 12 ausgeführt sein. Der Identifikationssensor ist dazu eingerichtet, Informationen bezüglich auszugebender Nahrungsmittelmengen, auszugebender Nahrungsmittelmischverhältnisse oder Personenidentifikationen an die Steuereinheit weiterzuleiten. Mittels einem zum Identifikationssensor zugehörigen Identifikationsmittel kann somit einerseits auf ein Bedienermenü zugegriffen werden und andererseits eine gewünschte Menge und/oder ein gewünschtes Mischverhältnis von Nahrungsmitteln an die Steuereinheit weitergeleitet werden. Bei dem Identifikationsmittel kann es sich beispielsweise um einen RFID-Chip, einen QR-Code, einen Barcode oder Magnetstreifen handeln.

## Patentansprüche

1. Ausgabevorrichtung für schüttfähige Nahrungsmittel, umfassend ein Gehäuse (7), zumindest einen Vorratsbehälter (1) zur Aufnahme der Nahrungsmittel, einen unterhalb des zumindest einen Vorratsbehälters (1) angeordneten Wiegebehälter (2) und einen Wiegesensor (2'), wobei der Wiegebehälter (2) mit dem Wiegesensor (2') verbunden ist und wobei der Vorratsbehälter (1) an der Unterseite eine verschließbare Öffnung (1') aufweist,
wobei die Ausgabevorrichtung eine Steuereinrichtung und zumindest eine Steuerklappe (3) umfasst, wobei die Steuereinrichtung konfiguriert ist das Öffnen und Schließen der Steuerklappe (3) zu steuern, wobei bei geöffneter Steuerklappe (3) Nahrungsmittel aus dem Vorratsbehälter (1) in den Wiegebehälter (2) gelangen und bei geschlossener Steuerklappe (3) die Abgabe der Nahrungsmittel in den Wiegebehälter (2) verhindert wird, wobei die Ausgabevorrichtung zumindest eine Förderrinne (4) umfasst, wobei die Förderrinne (4) ein vorderes und ein hinteres Ende aufweist und zwischen der Öffnung des zumindest einen Vorratsbehälters (1') und der Steuerklappe (3) angeordnet ist, wobei das vordere Ende der Förderrinne (4) unter der Öffnung des Vorratsbehälters (1') und das hintere Ende der Förderrinne (4) über dem Wiegebehälter (2) angeordnet ist,
**dadurch gekennzeichnet, dass** mit der Steuerklappe (3) das hintere Ende der Förderrinne (4) verschließbar ist, und wobei die Ausgabevorrichtung zumindest eine Vibrationsvorrichtung (5), vorzugsweise einen Vibrationsmotor, und ein Einstellmittel umfasst, wobei die zumindest eine Vibrationsvorrichtung (5) an der Unterseite der zumindest einen Förderrinne (4) angebracht ist, wobei die Förderrinne (4) vorzugsweise auf Schaumstoff gelagert ist, wobei die Steuereinrichtung die Vibrationsvorrichtung (5) abhängig von der Schüttfähigkeit der Nahrungsmittel steuert und wobei mit dem Einstellmittel die Neigung der Förderrinne (4) abhängig von der Schüttfähigkeit der Nahrungsmittel einstellbar ist.

2. Ausgabevorrichtung nach Anspruch 1, **gekennzeichnet durch** eine Auswurfklappe (6), wobei der Wiegebehälter (2) an der Unterseite eine Öffnung (2") aufweist, wobei die Auswurfklappe (6) in einem geschlossenen Zustand die Öffnung (2") verschließt und wobei die Steuereinrichtung konfiguriert ist das Öffnen und Schließen der Auswurfklappe (6) zu steuern.

3. Ausgabevorrichtung nach Anspruch 2 , **gekennzeichnet durch** einen Produkttrichter (8), wobei der Produkttrichter (8) eine Öffnung an der Unterseite aufweist und unter der Öffnung des Wiegebehälters (2") angeordnet ist und wobei zumindest eine zusätzliche Vibrationsvorrichtung am Produktrichter (8) und/oder am Wiegebehälter (2) angebracht ist und von der Steuereinrichtung gesteuert wird.

4. Ausgabevorrichtung nach einem der Ansprüche 2 oder 3, **gekennzeichnet durch** einen Aufnahmebereich (9) für einen Behälter (10), wobei der Aufnahmebereich (9) unter der Auswurfklappe (6) angeordnet ist, wobei im Aufnahmebereich (9) ein Sensor (11) zur Erfassung eines im Aufnahmebereich (9) abgestellten Behälters (10) angeordnet ist, wobei der Sensor (11) vorzugsweise ein Ultraschallsensor ist und wobei die Steuereinrichtung mit dem Sensor (11) kommuniziert und nach Erfassung eines Behälters (10) das Öffnen der Auswurfklappe (6) freigibt.

5. Ausgabevorrichtung nach einem der Ansprüche 1 bis 4, **gekennzeichnet durch** eine Auswahleinrichtung, wobei die Auswahleinrichtung am Gehäuse (7) der Ausgabevorrichtung angebracht ist oder als externes Gerät ausgebildet ist, wobei die Auswahleinrichtung dazu eingerichtet ist, ein Steuersignal an die Steuereinheit zu senden, welches die Ausgabe der Nahrungsmittel aus dem zumindest einen Vorratsbehälter (1) startet, wobei mit der Auswahleinrichtung die Menge der auszugebenden Nahrungsmittel auswählbar ist.

6. Ausgabevorrichtung nach Anspruch 5, **gekennzeichnet durch** zumindest zwei Vorratsbehälter, wobei in jedem der Vorratsbehälter unterschiedliche Nahrungsmittel gelagert sind und jedem der Vorratsbehälter eine Steuerklappe zugeordnet ist, wobei mit der Auswahleinrichtung ein Mischverhältnis der Nahrungsmittel abhängig von der Gesamtmenge der auszugebenden Nahrungsmittel-Mischung auswählbar ist, wobei die Steuereinrichtung konfiguriert ist, das Öffnen und Schließen der jeweiligen Steuerklappe abhängig vom ausgewählten Mischverhältnis der Nahrungsmittel zu steuern.

7. Ausgabevorrichtung nach einem der Ansprüche 5 oder 6, **dadurch gekennzeichnet, dass** die Auswahleinrichtung ein Anzeigeelement (12), vorzugsweise einen Touchscreen, am Gehäuse (7) der Ausgabevorrichtung aufweist, wobei mit dem Anzeigeelement (12) im Standby-Modus Produktinformationen zu den Nahrungsmitteln anzeigbar sind.

8. Ausgabevorrichtung nach einem der Ansprüche 1 bis 7, **gekennzeichnet durch** zumindest einen Identifikationssensor ausgewählt aus der Gruppe, bestehend aus Barcode-, QR-Code-Scanner, Magnetstreifenleser und RFID-Reader, wobei der Identifikationssensor eingerichtet ist, Informationen bezüglich auszugebender Nahrungsmittelmengen, auszugebender Nahrungsmittelmischverhältnisse oder Personenidentifikationen an die Steuereinheit weiterzuleiten.

9. Ausgabevorrichtung nach einem der Ansprüche 1 bis 8, **gekennzeichnet durch** ein Funkmodul, vorzugsweise ein GSM-Modul, zur Übermittlung des Füllstands des zumindest einen Vorratsbehälters (1), wobei die Steuereinrichtung eingerichtet ist, den Füllstand zu speichern und nach einer Ausgabe von Nahrungsmitteln aus dem Vorratsbehälter (1) die vom Wiegesensor gemessene Menge an Nahrungsmitteln vom gespeicherten Füllstand abzuziehen und bei Erreichung eines vordefinierten Mindestfüllstands das Funkmodul anzusteuern.

10. System zur Ausgabe von schüttfähigen Nahrungsmitteln, wobei das System zumindest eine Ausgabevorrichtung nach einem der Ansprüche 1 bis 9 und einen Behälter (10) umfasst, wobei der Behälter (10) zumindest ein Identifikationsmittel umfasst, wobei das Identifikationsmittel ausgewählt ist aus der Gruppe, bestehend aus RFID-Chip, QR-Code, Barcode und Magnetstreifen, wobei die Ausgabevorrichtung zumindest einen korrespondierenden Identifikationssensor umfasst, welcher eingerichtet ist die im Identifikationsmittel gespeicherten Informationen, vorzugsweise die maximale Füllmenge des Behälters, eine gewünschte Menge an Nahrungsmitteln, ein gewünschtes Mischverhältnis von Nahrungsmitteln oder eine Seriennummer, an die Steuereinheit weiterzuleiten.

11. System zur Ausgabe von schüttfähigen Nahrungsmitteln, wobei das System eine Ausgabevorrichtung nach einem der Ansprüche 1 bis 9 und ein Kassensystem umfasst, wobei die Ausgabevorrichtung ein Bonmodul umfasst, welches in Zusammenarbeit mit der Steuereinrichtung, in welcher die Preise pro kg der jeweiligen Nahrungsmittel gespeichert sind, eingerichtet ist, einen Preis-Bon gemäß ausgegebener Menge an Nahrungsmittel auszugeben und/oder direkt an das Kassensystem weiterzuleiten, wobei der Bon direkt am Kassensystem verarbeitbar ist.

12. Verfahren zur Ausgabe von schüttfähigen Nahrungsmitteln mit zumindest einer Ausgabevorrichtung nach einem der Ansprüche 1 bis 9, **gekennzeichnet durch** die Schritte
- Öffnen der Steuerklappe (3) durch die Steuereinrichtung und befördern einer gewählten Nahrungsmittel-Menge aus dem Vorratsbehälter (1) in den Wiegebehälter (2), wobei permanent das Gewicht der Nahrungsmittel im Wiegebehälter (2) mithilfe des Wiegesensors (2') gemessen wird,
- Schließen der Steuerklappe (3) durch die Steuereinrichtung, sobald die gewählte Menge an Nahrungsmittel im Wiegebehälter (2) mittels Wiegesensor (2') gemessen wird,
- Entnahme der Nahrungsmittel aus dem Wiegebehälter (2).

13. Verfahren nach Anspruch 12, **gekennzeichnet durch** zwei oder mehr Vorratsbehälter (1), in welchen unterschiedliche Nahrungsmittel gelagert sind, umfassend die Schritte
- Auswählen eines Mischverhältnisses und einer Gesamtmenge von in den Vorratsbehältern (1) gelagerten Nahrungsmitteln mit einer Auswahleinrichtung und/oder mit einem Identifikationsmittel,
- Weiterleiten des Mischverhältnisses und der Gesamtmenge durch die Auswahleinrichtung und/oder einen Identifikationssensor an die Steuereinrichtung,
- Ausgeben einer Menge eines Nahrungsmittels aus einem der Vorratsbehälter (1) gemäß Mischverhältnis und Gesamtmenge durch Öffnen und Schließen der zugehörigen Steuerklappe (3), welche die Ausgabe aus dem Vorratsbehälter (1) in den Wiegebehälter (2) erlaubt,
- Wiederholen des letzten Schrittes an einem anderen Vorratsbehälter (1) bis die Gesamtmenge des Mischverhältnisses in den Wiegebehälter (2) ausgegeben ist,
- Entnahme der Gesamtmenge aus dem Wiegebehälter (2).

14. Verfahren nach Anspruch 13, **gekennzeichnet durch** zwei oder mehr Ausgabevorrichtungen und einen Behälter (10), wobei jede der Ausgabevorrichtungen zumindest einen Vorratsbehälter (1) mit unterschiedlichen Nahrungsmitteln umfasst und jeder Wiegebehälter (2) eine Öffnung (2') mit einer Auswurfklappe (6) umfasst, umfassend die Schritte
- Ausgeben der Nahrungsmittel aus den jeweiligen Ausgabevorrichtungen in die Wiegebehälter (2) der Ausgabevorrichtungen gemäß Mischverhältnis und Gesamtmenge,
- Abgeben eines Lichtsignals in einem Aufnahmebereich (9) einer Ausgabevorrichtung mittels eines visuellen Signalmittels,
- Abstellen des Behälters (10) in den mittels Lichtsignal gekennzeichneten Aufnahmebereich (9) durch eine die Ausgabevorrichtung bedienende Person, wobei vorzugsweise ein im Aufnahmebereich (9) angeordneter Sensor das Vorhandensein des Behälters (10) an die Steuereinheit weiterleitet,
- Öffnen der Auswurfklappe (6) des oberhalb des Behälters (10) angeordneten Wiegebehälters (2),
- Wiederholen der letzten drei Schritte an einer anderen Ausgabevorrichtung bis die Gesamtmenge des Mischverhältnisses in den Behälter (10) ausgegeben ist.
